(19) **Europäisches Patentamt**

**European Patent Office**

**Office européen des brevets**

(11) **EP 1 619 913 A1**

(12) **EUROPEAN PATENT APPLICATION**
published in accordance with Art. 158(3) EPC

(43) Date of publication:
**25.01.2006 Bulletin 2006/04**

(51) Int Cl.:
*H04Q 7/38* (1995.01)    *H04L 12/56* (1990.01)

(21) Application number: **03725711.0**

(22) Date of filing: **30.04.2003**

(86) International application number:
**PCT/JP2003/005538**

(87) International publication number:
**WO 2004/098226 (11.11.2004 Gazette 2004/46)**

(84) Designated Contracting States:
**AT BE BG CH CY CZ DE DK EE ES FI FR GB GR HU IE IT LI LU MC NL PT RO SE SI SK TR**

(71) Applicant: **FUJITSU LIMITED**
**Kawasaki-shi,**
**Kanagawa 211-8588 (JP)**

(72) Inventor: **KIMURA, Dai,**
**c/o FUJITSU LIMITED**
**Kawasaki-shi,**
**Kanagawa 211-8588 (JP)**

(74) Representative: **HOFFMANN EITLE**
**Patent- und Rechtsanwälte**
**Arabellastrasse 4**
**81925 München (DE)**

(54) **TRANSMISSION BAND ASSIGNING DEVICE**

(57)    The present invention relates to a transmission-band allotting apparatus for suitably allotting a band used for transmitting a packet to each terminal in a packet radio transmission system. An object of the present invention is to provide a fair service to individual terminals, and to improve the throughput of downlink. Therefore, the transmission-band allotting apparatus according to the present invention is constructed by preferentially allotting the band of the downlink to terminals in a descending order of ratios of a deviation from an average value of transmission qualities notified by the terminal and a dispersion of each of the transmission qualities.

F I G. 1

**Description**

*TECHNICAL FIELD*

The present invention relates to a transmission-band allotting apparatus which suitably allots to individual terminals a band used for transmitting packets in a radio transmission system in which transmission information is transmitted in the unit of a packet.

*BACKGROUND ART*

In a wide-band CDMA (Code Division Multiple Access) mobile communication system, it is possible to provide a packet transmission service at a speed of several hundred kilobits/second.

However, in such a mobile communication system, for example, HSDPA (High Speed Downlink Packet Access) is being applied and practically used as a technique able to greatly raise a down transmission speed without increasing an occupied band in a wireless frequency band so as to get access to the Internet and provide a service of streaming at a speed equal to that of wireless LAN.

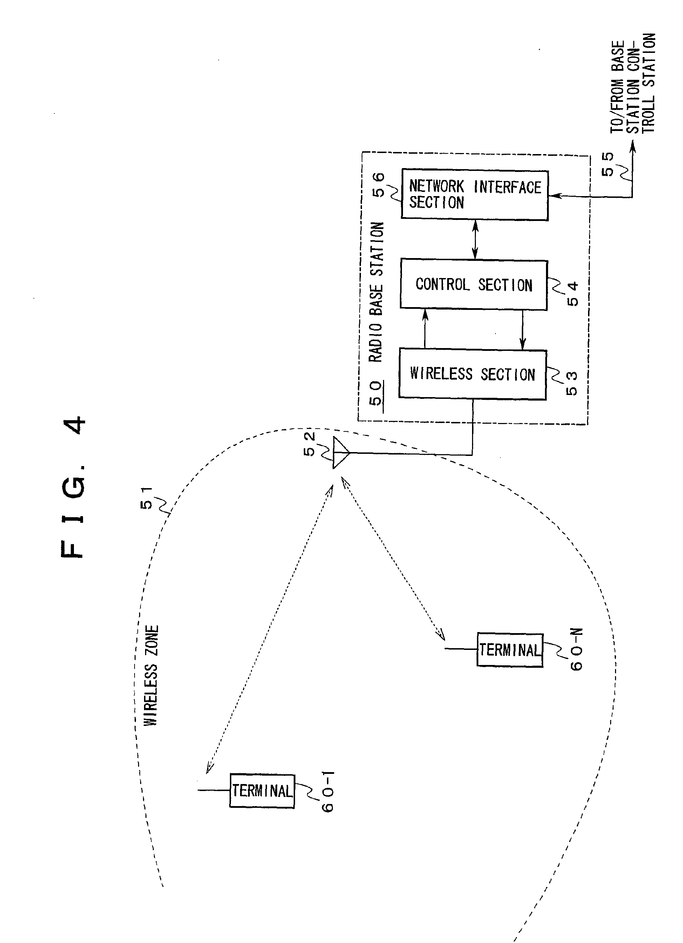

Fig. 4 is a view showing a constructional example of the mobile communication system applying HSDPA thereto.

In this figure, terminals 60-1 to 60-N are located in a wireless zone 51 (for brevity, it is here supposed that this wireless zone 51 is a wireless zone adapted for the wide band CDMA system) formed by a radio base station 50.

The radio base station 50 is constructed from the following elements.

- An antenna system 52
- A wireless section 53 connected to a feeding point of the antenna system 52.
- A control section 54 connected to a demodulating output and a modulating input of the wireless section 53.
- A network interface section 56 connected to a communication link 55 formed between the network interface section 56 and an unillustrated base station control station, and also connected to a specific port of the control section 54.

In the mobile communication system of such a construction, the control section 54 generates, analyzes and relays the transmission information to be mutually delivered between the control section 54 and the terminals 60-1 to 60-N to achieve the following terms by making a connection with the above base station control station through the network interface section 56 and the communication link 55.

- Formation of the wireless zone 51
- Channel control and call setting relating to a terminal (hereinafter, for brevity, shown by giving a code "60-c" meaning that it can be pertinent to any one of the terminals 60-1 to 60-N) located in this wireless zone 51 and at which some call occurs (including a case in which the transmission information is simply transmitted in the unit of the packet).

The wireless section 53 suitably forms a wireless transmission path adapted for a predetermined multiple access system, a frequency allocation and a channel construction between the wireless section 53 and the terminals 60-1 to 60-N through the antenna system 52 under control of such a control section 54.

The mobile station 60-c measures SIR (signal-to-interference wave electric power ratio) of a signal arriving from the radio base station 50 through a common pilot channel (hereinafter, called CPICH) as a common channel, and modulated by a known pattern.

Further, the mobile station 60-c generates CQI (Channel Quality Indicator) indicating transmission quality of the above CPICH and constructed by five bits and indicating the following items on the basis of this SIR, and transmits this CQI to the destination of the radio base station 50 through an up HS-DPCCH channel.

- TBS (Transport Block Size) as a number of information bits (means a receivable transmission speed and transmission quality of downlink at the present time point) per one packet able to be received by the mobile station 60-c.
- A combination (MCS: Modulation and Coding Scheme) of the modulating system to be applied to the transmission of this packet, and a number of channelization codes.

In the radio base station 50, a processor 54 performs retransmission control and scheduling by referring to the CQI received through the antenna 52 and the wireless section 53.

Here, the scheduling means that the band of the downlink is suitably allotted to this mobile station 60-c on the basis of the above CQI notified from the mobile station 60-c.

In the above retransmission control, a successive SAW channel shown by a unique SAW (Stop and Wait) channel number included in every packet is suitably discriminated and the retransmission control is achieved by applying this SAW to the resending of the pertinent packet.

The control section 54 determines a mobile station (for brevity, it is here supposed that this mobile station is shown by the code "60-c") pertinent to the destination of a frame to be successively transmitted, and MCS to be applied to the transmission of this frame, and transmits a data packet to the destination of this mobile station 60-c through HS-DSCH by applying this MCS.

The mobile station 60-c judges whether this data packet is normally received or not on the basis of an error check bit included in such a data packet, and transmits an Ack/Nack signal showing a result of this judgment to the destination of the radio base station 50 by using an up HS-DPCCH channel similarly to the CQI afore-mentioned.

In the radio base station 50, the control section 54 gives instructions of the coding system and the modulating system adapted for the above TBS to the wireless section 53, and transmits a down packet to the destination of the mobile station 60-c through this wireless section 53 and the antenna 52 so that general throughput is improved and maintained.

There is a restriction in the number of mobile stations allowed with respect to the transmission of the packet as a response to such a down packet, or spontaneously transmitted under the above scheduling since resources constituting the wireless transmission path are limited.

The following are conventional scheduling systems for realizing the allotment of the downlink to the mobile stations 60-1 to 60-N under such a restriction.

- Round Robin system (hereinafter called RR system) in which the band of the downlink is simply sequentially allotted to the mobile stations 60-1 to 60-N.
- MaxCIR system in which the band of the downlink is allotted to the mobile station reporting a maximum TBS (receivable rate).
- Proportional Fairness system (hereinafter called PF system) in which the ratio of newest reported TBS and an average value of these TBSs is calculated as a priority for every mobile station and the band of the downlink is preferentially allotted to the mobile station having a maximum priority.

For example, the following systems also belong to such a PF system.

- A system in which the band of the downlink is allotted to the mobile station relatively having a maximum newest receivable rate with respect to a transmission speed (transmission rate) actually performed in signal transmission as disclosed in non-patent literature 1 described later.
- A system in which an improvement able to guarantee constant transmission quality (or throughput) of the mobile station is made in the PF system as disclosed in non-patent literature 2 and non-patent literature 3 described later.

The control section 54 performs the following processings in parallel with the scheduling based on the PF system within the above scheduling systems.

- The above-described CQI, TBS and Ack/Nack are extracted by demodulating and decoding a receiving signal wave arriving from the mobile station 60-c through the up HS•DPCCH channel.

- With respect to an already fixed integer K, a time series m and an identifier n (= 1 to N) of the mobile stations 60-1 to 60-N, for example, a packet error rate $PER_n(m)$ is presumed as a moving average, etc. of plural preceedingly extracted Ack/Nacks defined in the following formula (1).

$$PER_n(m) = \sum_{k=0}^{K-1} \{1 - ACK_n(m-K)\} / 2 \left/ \sum_{k=0}^{K-1} | ACK_n(m-K) | \right. \quad \cdots (1)$$

Here, the value of the function $ACK_n(m)$ is "1" when the Ack is received, and becomes "-1" when the Nack is received instead of this Ack, and is "0" when the band of the downlink is allotted to the pertinent mobile station.

- A throughput $T_n(m)$ [bit/packet] per unit packet is presumed by making an arithmetic calculation shown by the following formula (2) with respect to Ack/Nack and $TBS_{TX}$ to be transmitted to the destination of the mobile station 60-n.

$$T_n(m) = (1 / K) \cdot \sum_{k=0}^{K-1} T B S_{Tx}(m-K) \times A C K_n(m-K) \quad \cdots (2)$$

- The above-described MCS (which is normally unique MCS corresponding to CQI in advance, but becomes MCS corresponding to TBS smaller than its TBS when the size of pertinent data is smaller than the value corresponding to TBS) is specified on the basis of the size of data to be transmitted and CQI.
- A packet (hereinafter called access allowance notification) meaning the allotment of the band of the downlink is transmitted to the destination of the mobile station 60-t to be allotted to the band of the downlink under the above scheduling through HS-SCCH or HS-DSCH on the basis of the modulating system adapted for MCS thus specified within the mobile stations 60-1 to 60-N.

Namely, in the individual terminal in which the packet transmission service based on HSDPA should be provided in parallel, the band of the downlink is allotted in a descending order of the ratio of transmission quality of a signal arriving through the above-described CPICH from the radio base station 50, and an average value of these transmission qualities.
Accordingly, the up radio channel is efficiently commonly used by plural terminals under the modulating system and the retransmission control flexibly adapted to the substantial transmission quality.

Patent literature 1

JP, (A), No.2002-171287 (claims 1 to 8, 10 and 11, and paragraph 0006)

Patent literature 2

JP, (A), No. Heill-261634 (claim 1 and paragraphs 0005, 0013, 0020 and 0021)

Non-patent literature 1

"Data Throughput of CDMA-HDR a High Efficiency-High Data Rate Personal Communication Wireless System", Proceeding of IEEE VTC-2000 Spring, A. jarali, R. Padovani, R. Pankaj

Non-patent literature 2

" Fast Packet Scheduling Algorithm Based on Instantaneous SIR with Constraint Condition Assuring Minimum Throughput", Technical Report of The Institute of Electronics, Information and Communication Engineers, RCS2002-75 (2002-06), by Ofuji, Abeta and Sawahashi

Non-patent literature 3

"A Proposal of All-IP Mobile Wireless Network Architecture (3)", Technical Report of The Institute of Electronics, Information and Communication Engineers, MoMuC2002-3(2002-05), by Ono, Matsunaga, Momona and Okanoue
In the above conventional examples, the above-described PF method was applied to the scheduling without making any correction of the following (problem 1) to (problem 3).

(Problem 1) In the following enumerated mobile stations, it is difficult to allot the band of the downlink even when the transmission quality of the downlink is high.

- A mobile station located within a line-of-sight distance from the radio base station and having a small change in the transmission quality of the downlink.
- A mobile station in which TBS notified to the radio base station 50 steadily becomes a maximum value of a range of its TBS since the transmission quality of the downlink is sufficiently high.

(Problem 2) General transmission efficiency (throughput) is lower than that in the application case of the MaxCIR system since the allotment of the band of the downlink is given with a similar priority in both a mobile station having a high average value of the transmission quality of the downlink and a mobile station low in its transmission quality and having a small average value of this transmission quality.

(Problem 3) The value of TBS notified to the radio base station 50 by each mobile station might include an error caused by a deviation of characteristics, an environmental condition, unfair reconstruction and others caused in processes of quantization and coding performed to calculate this TBS and relating to the individual mobile station. Accordingly, the terminal allotted the band of the downlink on the basis of the scheduling was not necessarily selected in the descending order of the substantial transmission quality of the downlink by such an error.

Accordingly, in the above conventional example, the band of the downlink was not necessarily fairly allotted to the mobile stations 60-1 to 60-N.

*DISCLOSURE OF THE INVENTION*

An object of the present invention is to provide a transmission-band allotting apparatus for providing a fair service to each terminal and improving the throughput of the downlink.

Another object of the present invention is to greatly correct or abate the problem described in the above (Problem 1) and enhance the fairness according to the allotment of the band of the downlink of the terminal.

Still another object of the present invention is to stably maintain the priority with which the band of the downlink is allotted to terminals to an appropriate value even when downlinks individually formed between the transmission-band allotting apparatus and the terminals has a large difference and a change in their transmission quality.

Still another object of the present invention is to reduce an inappropriate balance of the fairness and the general throughput due to the above-described (Problem 2).

Still another object of the present invention is to preferentially allot the band of the downlink even to the terminal having a low average value of the notified transmission quality as well as to the terminal having a high average value of the notified transmission quality.

Still another object of the present invention is to allot the band of the downlink to any terminal on the basis of the priority adapted to the substantial transmission error rate of the downlink notified by the terminal.

Still another object of the present invention is to maintain high throughput of the transmission band and the fairness to the terminals in the radio transmission system to which the inventions are applied, and reduce running cost as well as to improve general reliability and service quality.

The above object is achieved by a transmission-band allotting apparatus characterized in that the band of the downlink is preferentially allotted to terminals in the descending order of a ratio of a deviation from an average value of transmission quality notified by the terminals, and a dispersion of each of the transmission qualities.

In such a transmission-band allotting apparatus, the band of the downlink is more preferentially allotted to any terminal according to its transmission quality when a change in the transmission quality is smaller.

Further, the above object is also achieved by a transmission-band allotting apparatus characterized in that the band of the downlink is preferentially allotted to terminals in the descending order of a ratio of a deviation from an average value of the transmission qualities of the downlink notified from the terminals, and dispersion of each of the transmission qualities.

In such a transmission-band allotting apparatus, the above ratio is given as the ratio of the deviation from the average value of the transmission qualities notified by all the terminals and the dispersion instead of the average value of the transmission quality notified from every terminal.

Further, the above object is achieved by a transmission-band allotting apparatus characterized in that the band of the downlink is preferentially allotted to terminals according to both or one of a ratio of the transmission quality notified by the terminals and the average value of this transmission quality, and a ratio of the transmission quality and a total average of the transmission qualities notified from all the terminals, such that the larger ratio the terminals have, the more preferentially the terminals are allotted the band.

In such a transmission-band allotting apparatus, the ratio of the above transmission quality and the average value is referred according to the conventional PF method, and the smaller the average value of the transmission qualities calculated for all the terminals 10-1 to 10-N, the larger the ratio of the transmission quality and the total average. Accordingly, the problem of the conventional example as described in (problem 2) can be solved.

Further, the above object is achieved by a transmission-band allotting apparatus characterized in that the band of the downlink is preferentially allotted to terminals according to both or one of a ratio of the transmission quality notified by the terminals and an average value of the transmission quality, and a ratio of dispersion and a deviation from a total average value of the transmission qualities notified from all the terminals, such that the larger ratio the terminals have, the more preferentially the terminals are allotted the band.

In such a transmission-band allotting apparatus, the priority with which the band of the downlink is allotted to any terminal is a predetermined desirable ratio determined by weighting by the above two ratios or selecting the above-described fairness and throughput.

Further, the above object is achieved by a transmission-band allotting apparatus characterized in that the band of the downlink is preferentially allotted to terminals according to both or one of a ratio of the transmission quality notified by the terminals and an average value of this transmission quality, and a ratio of dispersion and a deviation from a total average value of this transmission quality, such that the larger ratio the terminals have, the more preferentially the terminals are allotted the band.

In such a transmission-band allotting apparatus, the above deviation is given as a deviation from the total average of the transmission qualities notified by all the terminals instead of the average value of the transmission quality notified by each terminal.

Further, the above object is achieved by a transmission-band allotting apparatus characterized in that the band of the downlink is individually allotted to terminals with the priority. The priority is calculated according to not the transmission quality of the downlink notified from the terminal but the transmission quality weighted such that the smaller a transmission error rate notified together with this transmission quality, the larger the weighting.

In the transmission-band allotting apparatus of such a construction, the band of the downlink is allotted to any terminal according to the priority adapted for a substantial transmission error rate of the downlink notified by the terminal.

The summary of such transmission-band allotting apparatuses is enumerated below.

In a first transmission-band allotting apparatus according to the present invention, a transmission quality acquiring unit acquires for every terminal the transmission quality of the downlink notified by the terminal. A static processing unit calculates for every terminal an average value of the transmission quality acquired by the transmission quality acquiring unit and dispersion. An allotting unit preferentially allots the band of the downlink to terminals in the descending order of a ratio of a deviation from the average value of the transmission quality acquired by the transmission quality acquiring unit and dispersion.

Namely, the band of the downlink is more preferentially allotted to any terminal according to its transmission quality when a change in the transmission quality is smaller as long as the deviation is not greatly small.

This accordingly abates the problem substantially in the conventional example as described in (Problem 1) which is caused from the event that the priority with which the band of a downlink is allotted to the terminal is low even when the average value of the transmission quality notified by this terminal is large. Thus, the fairness relating to the allotment of the band of the downlink to the terminal is improved.

In a second transmission-band allotting apparatus of the present invention, the transmission quality acquiring unit acquires for every terminal the transmission quality of the downlink notified by the terminal. The statistic processing unit averages all of transmission qualities of the terminals acquired by the transmission quality acquiring unit to obtain a total average value, and also calculates for every terminal an average value of the transmission quality acquired by this transmission quality acquiring unit. The allotting unit preferentially allots the band of the downlink to terminals according to both or one of a ratio of the transmission quality acquired by the transmission quality acquiring unit and the average value, and a ratio of this transmission quality and the total average, such that the larger ratio the terminals have, the more preferentially the terminals are allotted the band.

The above ratio of the transmission quality and the average value is referred according to the conventional PF method, , and the smaller the average value of the calculated transmission qualities of all the terminals, the larger the ratio of its transmission quality and the total average value.

Namely, according to the invention, in comparison with the above-described PF method, it is possible to abate the problem of the conventional example as described in (problem 2) by additionally performing processing for calculating the ratio of the transmission quality and the total average. This accordingly corrects the unbalance of the fairness and the general throughput due to the problem in (problem 2).

In a third transmission-band allotting apparatus according to the present invention, the transmission quality acquiring unit acquires for every terminal the transmission quality of the downlink notified by the terminal. The statistic processing unit averages all the transmission qualities of the terminals acquired by the transmission quality acquiring unit top obtain a total average value, and also calculates for every terminal the average value and dispersion of the transmission quality acquired by this transmission quality acquiring unit. The allotting unit preferentially allots the band of the downlink to terminals according to both or one of a ratio of the transmission quality acquired by the transmission quality acquiring unit and the average value, and a ratio of a deviation from the total average value of this transmission quality and dispersion, such that the larger ratio the terminals have, the more preferentially the terminals are allotted the band.

Namely, it is possible to set the priority with which the band of the downlink is allotted to any terminal by weighting or selecting the above two ratios, realizing a balance between the fairness and throughput in a predetermined desirable form.

Accordingly, in contrast to the first transmission-band allotting apparatus according to the present invention, the band of the downlink is also preferentially allotted to the mobile station having a low average value of the notified transmission quality as well as to the mobile station having a high average value of the notified transmission quality.

In a fourth transmission-band allotting apparatus according to the present invention, the transmission quality acquiring unit acquires for every terminal the transmission quality of the downlink notified by the terminal. The statistic processing unit averages all of transmission qualities of the terminals acquired by the transmission quality acquiring unit to obtain a total average value, and calculates dispersion of each of the transmission qualities and also calculates for every terminal the average value of the transmission quality acquired by this transmission quality acquiring unit. The allotting unit preferentially allots the band of the downlink to terminals according to both or one of a ratio of the transmission quality acquired by the transmission quality acquiring unit and the average value, and a ratio of a deviation from the total average value of this transmission quality and dispersion, such that the larger ratio the terminals have, the more preferentially the terminals are allotted the band.

The above deviation is given as a deviation from the total average of the transmission qualities notified by all the terminals instead of the average value of the transmission quality notified by each terminal.

Accordingly, in contrast to the third transmission-band allotting apparatus, the priority with which the band of the downlink is allotted to these terminals is stably maintained to an appropriate value even when downlinks individually formed between the transmission-band allotting apparatus and the terminals has a large difference and a change in their transmission quality.

In a fifth transmission-band allotting apparatus according to the present invention, the transmission quality acquiring unit acquires for every terminal a transmission error rate and transmission quality of the downlink notified by the terminal, and weights this transmission quality by a weight which increases as the transmission error rate decreases. The statistic processing unit calculates for every terminal an average value of the transmission quality weighted by the transmission quality acquiring unit and dispersion. The allotting unit preferentially allots the band of the downlink to terminals in the descending order of a ratio of a deviation from the average value of the transmission quality weighted by the transmission quality acquiring unit and dispersion.

The transmission-band allotting apparatus of such a construction differs from the above-described first transmission-band allotting apparatus in that the band of the downlink is individually allotted to the terminals with the priority adapted for not the transmission quality of the downlink notified by the terminal but the transmission quality which is weighted such that the larger the transmission error rate notified together with the transmission quality, the smaller the transmission quality.

Accordingly, the band of the downlink is allotted to any terminal according to the priority adapted for a substantial transmission error rate of the downlink notified by the terminal.

In a sixth transmission-band allotting apparatus according to the present invention, the transmission quality acquiring unit acquires for every terminal the transmission error rate and the transmission quality of the downlink notified by the terminal, and weights this transmission quality by a weight which increases as this transmission error rate decreases. The statistic processing unit calculates the dispersions of all the transmission qualities of the terminal weighted by the transmission quality acquiring unit. The allotting unit preferentially allots the band of the downlink to terminals in the descending order of a ratio of a deviation from an average value of the transmission quality weighted by the transmission quality acquiring unit and dispersion, such that the larger ratio the terminals have, the more preferentially the terminals are allotted the band.

In the transmission-band allotting apparatus of such a construction, the band of the downlink is individually allotted to the terminals with the priority adapted for not the transmission quality of the downlink notified by the terminal but the transmission quality which is weighted such that the larger the transmission error rate notified together with the transmission quality, the smaller the weighting.

Accordingly, the band of the downlink is allotted to any terminal according to the priority adapted for a substantial transmission error rate of the downlink notified by the terminals.

In a seventh transmission-band allotting apparatus according to the present invention, the transmission quality acquiring unit acquires for every terminal the transmission error rate and the transmission quality of the downlink notified by terminal, and weights this transmission quality by a weight which increases as the transmission error rate decreases. The statistic processing unit averages all the transmission qualities of the terminals weighted by the transmission quality acquiring unit to obtain a total average value, and also calculates for every terminal an average value of the transmission quality weighted by this transmission quality acquiring unit. The allotting unit preferentially allots the band of the downlink to terminals according to both or one of a ratio of the transmission quality weighted by the transmission quality acquiring unit and the average value, and a ratio of this transmission quality and a total average, such that the larger ratio the terminals have, the more preferentially the terminals are allotted the band.

The transmission-band allotting apparatus of such a construction differs from the above-described second transmission-band allotting apparatus in that the band of the downlink is individually allotted to the terminals with the priority adapted for not the transmission quality of the downlink notified by the terminals but the transmission quality which is weighted such that the smaller the transmission error rate notified together with the transmission quality, the larger the weighting.

Accordingly, the band of the downlink is allotted to any terminal according to the priority adapted for a substantial transmission error rate of the downlink notified by the terminals.

In an eighth transmission-band allotting apparatus according to the present invention, the transmission quality acquiring unit acquires for every terminal the transmission error rate and the transmission quality of the downlink notified by terminals, and weights this transmission quality by a weight which increases as this transmission error rate decreases. The statistic processing unit averages all the transmission qualities of the terminals weighted by the transmission quality acquiring unit to obtain a total average value, and also calculates for every terminal an average value of the transmission quality weighted by this transmission quality acquiring unit and dispersion. The allotting unit preferentially allots the band of the downlink to terminals according to both or one of a ratio of the transmission quality weighted by the transmission quality acquiring unit and the average value, and a ratio of a deviation from the average value of this transmission quality and dispersion, such that the larger ratio the terminals have, the more preferentially the terminals are allotted the band.

The transmission-band allotting apparatus of such a construction differs from the above-described third transmission-band allotting apparatus in that the band of the downlink is individually allotted to the terminals with the priority adapted for not the transmission quality of the downlink notified by the terminals but the transmission quality which is weighted such that the smaller the transmission error rate notified together with the transmission quality, the larger the weighting.

Accordingly, the band of the downlink is allotted to any terminal according to the priority adapted for a substantial transmission error rate of the downlink notified by the terminals.

In a ninth transmission-band allotting apparatus according to the present invention, the transmission quality acquiring unit acquires for every terminal the transmission error rate and the transmission quality of the downlink notified by the terminal, and weights this transmission quality by a weight which increases as this transmission error rate decreases. The statistic processing unit averages all of transmission qualities of the terminals acquired by the transmission quality acquiring unit to obtain a total average value, and calculates dispersions of all of the transmission qualities, and also calculates for every terminal an average value of the transmission quality weighted by this transmission quality acquiring unit. The allotting unit preferentially allots the band of the downlink to terminals according to both or one of a ratio of the transmission quality weighted by the transmission quality acquiring unit and the average value, and a ratio of a deviation from the average value of this transmission quality and dispersion, such that the larger ratio the terminals have, the more preferentially the terminals are allotted the band.

The transmission-band allotting apparatus of such a construction differs from the above-described fourth transmission-band allotting apparatus in that the band of the downlink is individually allotted to these terminals with the priority adapted for not the transmission quality of the downlink notified by the terminals but the transmission quality which is weighted such that the smaller the transmission error rate notified together with the transmission quality, the larger the weighting.

Accordingly, the band of the downlink is allotted to any terminal according to the priority adapted for a substantial transmission error rate of the downlink notified by the terminals.

*BRIEF DESCRIPTION OF THE DRAWINGS*

    Fig. 1 is a view showing first to fourth embodiments of the present invention;
    Fig. 2 is an operation flow chart of the first to third embodiments of the present invention;
    Fig. 3 is an operation flow chart of the fourth embodiment of the present invention; and
    Fig. 4 is a view showing a constructional example of a mobile communication system applying HSDPA thereto.

*BEST MODE FOR CARRYING OUT THE INVENTION*

The embodiments of the present invention will next be explained in detail on the basis of the drawings.

[First Embodiment]

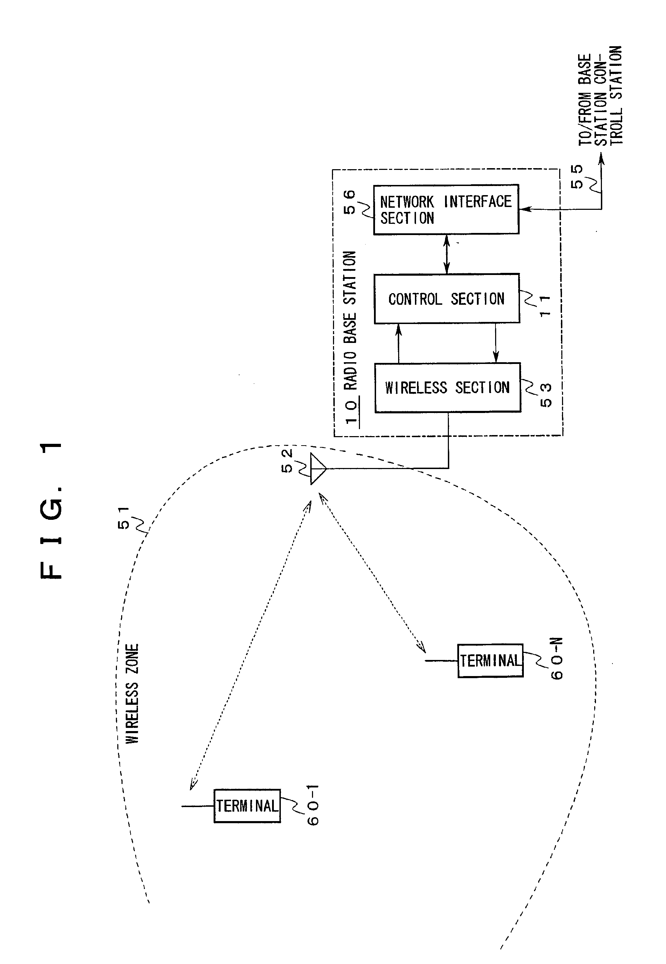

Fig. 1 is a view showing first to fourth embodiments of the present invention.

In this embodiment, a radio base station 10 is arranged instead of the radio base station 50, and a control section 11 is arranged instead of the control section 54 in this radio base station 10.

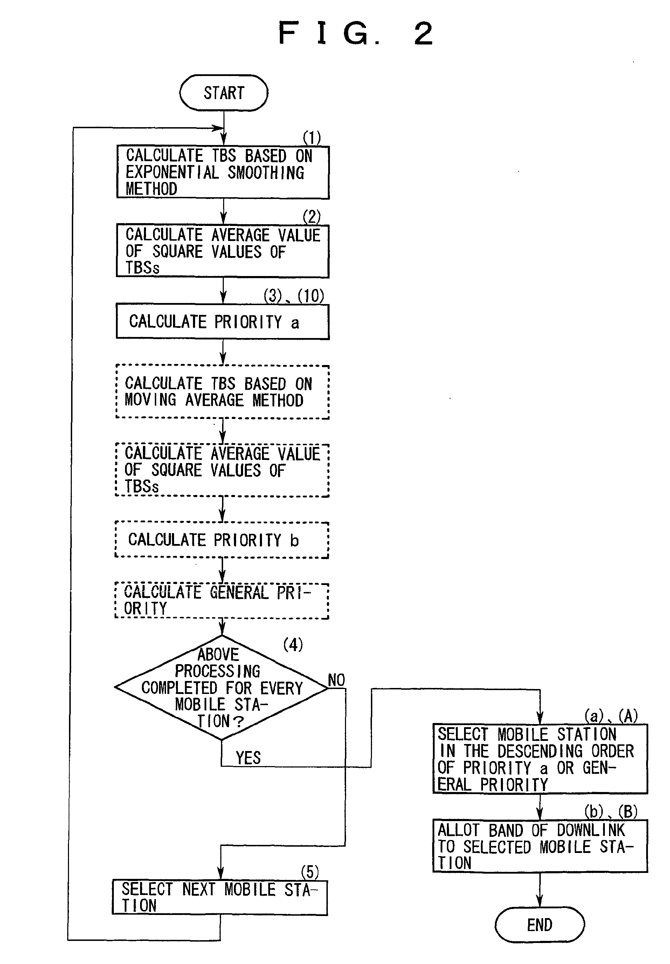

The operation of a transmission-band allotting apparatus in a first embodiment of the present invention will next be explained with reference to Figs. 1 and 2.

The features of this embodiment are characterized in the procedure of processing of the following scheduling performed by the control section 11 arranged in the radio base station 10.

In the following description, a code 60-n is noted additionally to a mobile station shown by an identifier n of the mobile station.

The control section 11 sequentially makes the following arithmetic calculation for the mobile station 60-n shown by the identifier n pertinent to each of 1 to N.

- With respect to a time series m, a forgetting coefficient $\mu$ (>0) less than 1, and $r_n(m)$ as TBS of the mobile station 60-n acquired in the process of scheduling, an average value $R_n(m)$ of its $r_n(m)$ and an average value $S_n(m)$ of square values of this $r_n(m)$ are calculated by repeating the arithmetic calculation based on an exponential smoothing method shown in the following recurrence formulas (3), (4) in the order of the time series ((1) and (2) of Fig. 2)

$$R_n(m) = \mu R_n(m-1) + (1-\mu)r_n(m) \qquad \ldots (3)$$

$$S_n(m) = \mu S_n(m-1) + (1-\mu)\{r_n(m)\}^2 \qquad \cdots (4)$$

The number of populations (the length of an interval on the time series) as an object of the exponential smoothing based on these recurrence formulas (3), (4) is set to be long as the above forgetting coefficient $\mu$ is increased.

- A priority $Pa_n(m)$ (hereinafter called priority a) of the terminal 60-n is calculated in the order of the time series m by making the arithmetic calculation shown by the following formula (5) on the basis of these average values $R_n(m)$, $S_n(m)$ and the above $r_n(m)$ ((3) of Fig. 2).

$$P a_n (m) = \frac{r_n (m) - R_n (m)}{[S_n (m) - \{R_n (m)\}^2]^{1/2}} \qquad \cdots (5)$$

Further, the control section 11 preferentially allots the band of downlink to mobile stations in the descending order of the above calculated priority $Pa_n(m)$ among the mobile stations 60-1 to 60-N, or to a mobile station having a maximum priority $Pa_n(m)$, in parallel with making the above arithmetic calculations ((1) to (5) of Fig. 2) ((a) and (b) of Fig. 2).
The denominator of the right-hand side of the above formula (5) corresponds to the square root of a dispersion value of TBS(=$r_n(m)$) calculated in the order of the time series m for every mobile station, and the numerator of this right-hand side means a deviation from an average value of this TBS (=$r_n(m)$).
Thus, in accordance with this embodiment, the band of the downlink of transmission with respect to the uplink is preferentially allotted to any mobile station as the amount of a change of the above-described TBS (=$r_n(m)$) calculated in the order of the time series m is reduced as long as the above deviation is not greatly small.
Accordingly, since the priority allotted to the band of the downlink is reduced as the average value $R_n(m)$ of the above TBS (=$r_n(m)$) is increased, the (Problem 1) caused in the conventional example as mentioned above is greatly corrected or reduced, and the fairness relating to the allotment of the band of the downlink of such transmission is raised.

[Second Embodiment]

The operation of a transmission-band allotting apparatus in a second embodiment of the present invention will next be explained with reference to Figs. 1 and 2.
This embodiment is characterized in the procedure of processing of the following scheduling performed by the control section 11 arranged in the radio base station 10.
The control section 11 performs the following processing to all the mobile stations 60-1 to 60-N (for brevity, it is here supposed that the mobile stations 60-1 to 60-N wait for the allotment of the band of the downlink based on HSDPA in parallel with each other) in addition to the arithmetic calculation for calculating the above-described priority a.

- With respect to the time series m and $r_n(m)$ as TBS of the mobile station 60-n acquired in the process of scheduling, an average value $R(m)$ of its $r_n(m)$ relating to all the mobile stations 60-1 to 60-N and an average value $S(m)$ of these square values of $r_n(m)$ are calculated by repeating the arithmetic calculation based on the moving average method in the order of the time series as shown by the following formulas (6), (7) ((6) and (7) of Fig. 2).

$$R(m) = \sum_{n=1}^{N} r_n(m) / N \qquad \cdots (6)$$

$$S(m) = \sum_{n=1}^{N} \{r_n(m)\}^2 / N \qquad \cdots (7)$$

- A priority $Pb_n(m)$ (hereinafter called priority b) is calculated in the order of the time series m by making the arithmetic calculation shown by the following formula (8) on the basis of the above $r_n(m)$ in addition to these average values $R(m)$, $S(m)$ ((8) of Fig. 2)

$$Pb_n(m) = \frac{r_n(m) - R(m)}{[S_n(m) - \{R(m)\}^2]^{1/2}} \qquad \cdots (8)$$

Further, the control section 11 calculates a priority (hereinafter called general priority) $P_n(m)$ shown by one of the following formulas (9), (10) with respect to the above-described priority a ($Pa_n(m)$), the priority b ($=Pb_n(m)$), and coefficients $\alpha$, $\beta$ already fixed within the mobile stations 60-1 to 60-N in parallel with the above arithmetic calculation ((9) of Fig. 2).

$$P_n(m) = \alpha \times Pa_n(m) + \beta Pb_n(m) \qquad \dots (9)$$

$$P_n(m) = \max\{\alpha \times Pa_n(m), \beta Pb_n(m)\} \qquad \dots (10)$$

The above coefficients $\alpha$, $\beta$ respectively mean a degree in which the fairness relating to the allotment of the band of the downlink to the individual terminal should be prior, and a degree in which the improvement of the general throughput should be prior.

Further, the control section 11 preferentially allots the band of the downlink above-described in the descending order of such a general priority $P_n(m)$, or with respect to the terminal maximum in its general priority $P_n(m)$ ((A) and (B) of Fig. 2).

The denominator of the right-hand side of the above formula (8) corresponds to the square root of all dispersion values of TBS calculated in the order of the time series m with respect to the mobile stations 60-1 to 60-N, and the numerator of this right-hand side means a deviation of the individual TBS with respect to an average value of all these TBSs ($=r_n(m)$).

Namely, the priority with which the band of the downlink is allotted to any mobile station is set to a value at which the above-described fairness and the throughput are prior in a predetermined desirable ratio according to a combination of the values of the above-described coefficients $\alpha$, $\beta$.

Accordingly, in contrast to the above first embodiment, as long as these coefficients $\alpha$, $\beta$ are set to appropriate values, the band of the downlink is preferentially allotted to the mobile station having a high average value of TBS ($=r_n(m)$) in comparison with the other mobile stations, and is also preferentially allotted even in the mobile station having a low average value of this TBS.

Thus, in accordance with this embodiment, the above-described (Problem 2) caused because the band of the downlink is allotted to the mobile station having a large average value of the above TBS ($=r_n(m)$) and the mobile station having a low average value of this TBS in the conventional example is greatly reduced as well as the above (Problem 1). Further, the fairness relating to such allotment of the band of the downlink is raised, and the general throughput is highly maintained.

[Third Embodiment]

The operation of a transmission-band allotting apparatus in a third embodiment of the present invention will next be explained with reference to Figs. 1 and 2.

This embodiment is characterized in the procedure of the following processing performed by the control section 11 arranged in the radio base station 10.

The control section 11 performs processing different from that of each of the above-described first and second embodiments with respect to the following points.

- No arithmetic calculation ((2) and (7) of Fig. 2) based on the above-described recurrence formulas (4), (7) is made.
- Instead of the arithmetic calculation based on the above-described formulas (5), (8), the priority a (=$Pa_n(m)$) and the priority b (=$Pb_n(m)$) are calculated by making the arithmetic calculation shown in the following formulas (11), (12) ((10 and (11) of Fig. 2).

$$Pa_n(m) = r_n(m)/R_n(m) \qquad \qquad \ldots (11)$$

$$Pb_n(m) = r_n(m)/R(m) \qquad \qquad \ldots (12)$$

Further, the control section 11 calculates the general priority $P_n(m)$ shown by one of the above-described formulas (9), (10) with respect to the priority a and the priority b thus calculated ((12) of Fig. 2). The control section 11 further preferentially allots the band of the downlink to terminals in the descending order of its general priority $P_n(m)$, or to the terminal with largest general priority $P_n(m)$ ((A) and (B) of Fig. 2).

The priority a shown in the above formula (11) is equal to a priority calculated under the PF method applied to the conventional example, and the priority b shown in the above formula (12) becomes a large value as the average value of TBSs notified from all the mobile stations 60-1 to 60-N becomes small.

Accordingly, in comparison with the above second embodiment, the inappropriate balance of the fairness and the general throughput caused in the above-described problem 2 caused in the conventional example is reduced although the calculating procedure of the priority a and the priority b is greatly simplified.

In the above second and third embodiments, the general priority $P_n(m)$ is given as one of the formulas (9), (10) given with respect to the above-described coefficients $\alpha$, $\beta$.

However, for example, as shown in the following formula (13), such a general priority $P_n(m)$ may be also calculated as a simple product of the priority a and the priority b.

$$P_n(m) = Pa_n(m) \times Pb_n(m) \qquad \qquad \ldots (13)$$

[Forth Embodiment]

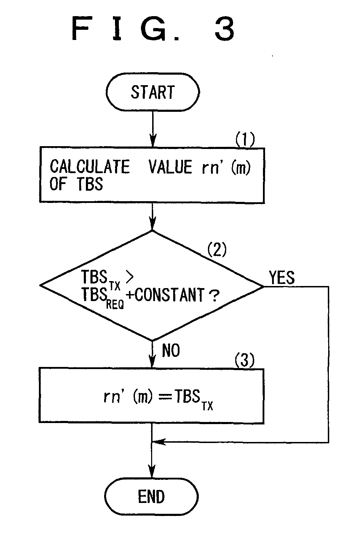

Fig. 3 is an operation flow chart of a fourth embodiment of the present invention.

The operation of a transmission-band allotting apparatus in the fourth embodiment of the present invention will next be explained with reference to Figs. 1 to 3.

As described later, this embodiment is characterized in the procedure of processing performed by the control section 11 arranged in the radio base station 10 and calculating a value $r_n'(m)$ of TBS to be applied instead of the above-described value $r_n(m)$ of TBS.

Information referred in a process of such processing is as follows.

- TBS (hereinafter called $TBS_{REQ}$ directly obtained from CQI as above-described
- The size of data to be actually transmitted to a terminal allotted in band by scheduling, and $TBS_{Tx}$ not necessarily having the same value as the above $TBS_{REQ}$ (e.g., when the size $TBS_{BUF}$ of data to be transmitted, stored to a buffer of the radio base station is smaller than $TBS_{REQ}$, it is sufficient to a value equal to this $TBS_{BUF}$, but it is desirably set to a value equal to $TBS_{REQ}$ when more data are stored to such a buffer.)

Further, the control section 11 performs the following processing by referring to these information.

- The $r_n'(m)$ of TBS shown by the following formula (14) is calculated with respect to a packet error rate $PER_n(m)$ presumed as above described, and $TBS_{TX}$ is calculated ((1) of Fig. 3).

$$r_n'(m)=(1-PER_n(m))TBS_{TX} \qquad \dots (14)$$

- It is judged whether this $TBS_{TX}$ is a sum or more of the above $TBS_{REQ}$ and an already fixed constant ($\geq 0$) or not (or this $TBS_{TX}$ is equal to both $TBS_{REQ}$ and $TBS_{BUF}$ or not) ((2) of Fig. 3). When its judging result is false, $r_n'(m)$ calculated on the basis of the above formula is selected.
- In contrast to this, when this judging result is true, $TBS_{TX}$ is applied as the value $r_n'(m)$ of TBS as shown in the following formula (15) ((3) of Fig. 3).

$$r_n'(m)=TBS_{TX} \qquad \dots (15)$$

Namely, the value $r_n'(m)$ of TBS is calculated on the basis of $TBS_{TX}$ and the packet error rate $PER_n(m)$ which the radio base station 10 can independently acquire under the initiative of the radio base station 10 instead of the value $r_n(m)$ of TBS notified by the mobile station 60-n.

Accordingly, in accordance with this embodiment, the mobile station allotted the band of the downlink on the basis of scheduling is appropriately selected with respect to the substantial transmission quality of the downlink even when the value of TBS notified to the radio base station 10 by each mobile station might include an error caused by a characteristic deviation of the individual mobile station, an environmental condition, an unfair reconstruction and others in the processes of quantization and coding performed to calculate this TBS.

In each of the above embodiments, the present invention is applied to the mobile communication system applying the above-described HSDPA thereto.

However, the present invention is not limited to such a mobile communication system, but can be also applied to various radio transmission systems irrespective of applied multiple access system, modulating system, frequency allocation, channel allocation and zone configuration as long as the band of the downlink is suitably allotted to the terminal in accordance with the transmission quality and the transmission speed notified by the terminal.

Further, in each of the above embodiments, the present invention is applied to the radio transmission system to which an adaptive modulating system suitably changed in the modulating system is applied in accordance with the transmission quality and the transmission speed notified by the terminal.

However, the present invention is not limited to such a construction, but can be adapted to various radio transmission systems irrespective of the formats and contents of the packet and information to be supplied in the notification of the above transmission quality and the transmission speed and the allotment of the band of the downlink even when such an adaptive modulating system is not applied at all.

Further, in each of the above embodiments, all the transmission bands of a specific radio channel are allotted to the individual mobile station in every constant period.

However, the present invention is not limited to such a construction. For example, when both or one of the band of the specific radio channel allotted to the individual mobile station and the length of a period for allotting this specific radio channel to every terminal is not constant, management for maintaining the appropriate fairness may be also performed together with respect to a substantially allotted band width and an integrated value of transmission capacity.

Further, in each of the above embodiments, the scheduling is performed in one mode described above.

However, the fairness and the general throughput using a predetermined desirable mode may be also maintained appropriately and stably by suitably changing the mode of such scheduling in a mode adapted to e.g., the construction of the system, a traffic distribution and other events (e.g., discriminated in the processes of channel control, call setting and supervisory and control).

Further, in the above first and second embodiments, the deviation from the average value of TBS is normalized on the basis of the square root of an above-described dispersion value as shown by the denominator of the right-hand side of each of the formulas (5), (8).

However, in such a denominator, the difference in the distribution of TBS may be also weighted in a predetermined desirable degree by applying a $\gamma$-multiplying value of the above dispersion value with respect to e.g., an arbitrary real number $\gamma$.

Further, the present invention is not limited to the above embodiments, but various embodiments can be set in the scope of the present invention, and any improvement may be also made with respect to one portion or all portions of a constructional device.

*Industrial Applicability*

As mentioned above, in a first transmission-band allotting apparatus according to the present invention, the above-described (Problem 1) caused in the conventional example because the priority allotted to the band of such downlink in a terminal is reduced even when the average value of transmission quality notified by the terminal is large is greatly reduced. Thus, the fairness relating to the allotment of the band of the downlink to the terminal is raised.

Further, in a second transmission-band allotting apparatus according to the present invention, the unbalance of the fairness and the general throughput caused by the above-described (problem 2) is corrected.

Further, in a third transmission-band allotting apparatus according to the present invention, the band of the downlink is also preferentially allotted in the mobile station having a low average value of the transmission quality notified by the terminal as well as the mobile station having a high average value of this transmission quality.

Further, in a fourth transmission-band allotting apparatus according to the present invention, even when downlinks individually formed between the transmission-band allotting apparatus and the terminals has a large difference and a change in their transmission quality, the priority with which the band of the downlink is allotted to these terminals is stably maintained to an appropriate value.

Further, in fifth to ninth transmission-band allotting apparatuses according to the present invention, the band of the downlink is also allotted to any terminal on the basis of the priority adapted for the substantial transmission error rate of the downlink notified by these terminals.

Accordingly, in the radio transmission system applying each of these inventions thereto, the throughput of the transmission band and the fairness of the terminal are highly maintained, and running cost is reduced as well as the improvements of general reliability and service quality.

**Claims**

1.  A transmission-band allotting apparatus comprising:

    a transmission quality acquiring unit acquiring, for every terminal, a transmission quality of a downlink notified by the terminal;
    a statistic processing unit calculating, for every terminal, an average value and a dispersion of transmission qualities acquired by said transmission quality acquiring unit; and
    an allotting unit preferentially allotting a band of the downlink to terminals in a descending order of ratios of the dispersions and deviations from the average values of the transmission qualities acquired by said transmission quality acquiring unit.

2.  A transmission-band allotting apparatus comprising:

    a transmission quality acquiring unit acquiring, for every terminal, a transmission quality of a downlink notified by the terminal;
    a statistic processing unit averaging all of transmission qualities of the terminals acquired by said transmission quality acquiring unit to obtain a total average value, and calculating, for every terminal, an average value of the transmission qualities acquired by said transmission quality acquiring unit; and
    an allotting unit preferentially allotting a band of the downlink to terminals according to both or one of ratios of the transmission qualities acquired by said transmission quality acquiring unit and the average values, and ratios of the transmission qualities and the total average, such that the larger ratios the terminals have, the more preferentially the terminals are allotted the band.

3.  A transmission-band allotting apparatus comprising:

    a transmission quality acquiring unit acquiring, for every terminal, a transmission quality of a downlink notified by the terminal;
    a statistic processing unit averaging all of transmission qualities of the terminals acquired by the transmission quality acquiring unit to obtain a total average value, and calculating, for every terminal, an average value and a dispersion of transmission qualities acquired by the transmission quality acquiring unit; and
    an allotting unit preferentially a band of the downlink to terminals according to both or one of ratios of the transmission qualities acquired by the transmission quality acquiring unit and the average values, and ratios of deviations from the average values of the transmission qualities and the dispersions, such that the larger ratios the terminals have, the more preferentially the terminals are allotted the band.

4. A transmission-band allotting apparatus comprising:

a transmission quality acquiring unit acquiring, for every terminal, a transmission quality of a downlink notified by the terminal;
a statistic processing unit averaging all of transmission qualities of the terminals acquired by the transmission quality acquiring unit to obtain a total average value, and calculating, for every terminal, an average value of the transmission qualities acquired by the transmission quality acquiring unit; and
an allotting unit preferentially allotting a band of the downlink to terminals according to both or one of ratios of the transmission quality acquired by the transmission quality acquiring unit and the average values, and ratios of deviations from the average values of the transmission qualities and the dispersions, such that the larger ratios the terminals have, the more preferentially the terminals are allotted the band.

5. A transmission-band allotting apparatus comprising:

a transmission quality acquiring unit acquiring, for every terminal, an transmission error rate and a transmission quality of a downlink notified by the terminal, and weighting the transmission quality such that the smaller the transmission error rate is, the larger the weighting is;
a statistic processing unit calculating, for every terminal, an average value and a dispersion of the transmission qualities weighted by said transmission quality acquiring unit; and
an allotting unit preferentially allotting a band of the downlink to terminals in a descending order of ratios of the dispersions and deviations from the average values of the transmission qualities weighted by said transmission quality acquiring unit.

6. A transmission-band allotting apparatus comprising:

a transmission quality acquiring unit acquiring, for every terminal, a transmission error rate and a transmission quality of a downlink notified by the terminal, and weighting the transmission quality such that the smaller the transmission error rate is, the larger the weighting is;
a statistic processing unit calculating, for every terminal, dispersions of all of transmission qualities weighted by the transmission quality acquiring unit; and
an allotting unit preferentially allotting a band of the downlink to terminals in a descending order of ratios of the dispersions and deviations from the average values of the transmission qualities weighted by the transmission quality acquiring unit.

7. A transmission-band allotting apparatus comprising:

a transmission quality acquiring unit acquiring, for every terminal, a transmission error rate and a transmission quality of a downlink notified by the terminal, and weighting the transmission quality such that the smaller the transmission error rate is, the larger the weighting is;
a statistic processing unit averaging all of transmission qualities of the terminals weighted by the transmission quality acquiring unit to obtain a total average value, and calculating, for every terminal, the average value of the transmission qualities weighted by the transmission quality acquiring unit; and
an allotting unit preferentially allotting a band of the downlink to terminals according to both or one of ratios of the transmission qualities weighted by the transmission quality acquiring unit and the average values, and ratios of the transmission qualities and the total average, such that the larger ratios the terminals have, the more preferentially the terminals are allotted the band.

8. A transmission-band allotting apparatus comprising:

a transmission quality acquiring unit acquiring, for every terminal, a transmission error rate and a transmission quality of a downlink notified by the terminal, and weighting the transmission quality such that the smaller the transmission error rate is, the larger the weighting is;
a statistic processing unit averaging all of transmission qualities of the terminals weighted by the transmission quality acquiring unit to obtain a total average value, and calculating, for every terminal, the average value and a dispersion of the transmission qualities weighted by the transmission quality acquiring unit; and

an allotting unit preferentially allotting a band of the downlink to terminals according to both or one of ratios of the transmission qualities weighted by the transmission quality acquiring unit and the average values, and ratios of deviations from the average values of the transmission qualities and the dispersions, such that the larger ratios the terminals have, the more preferentially the terminals are allotted the band.

9. A transmission-band allotting apparatus comprising:

a transmission quality acquiring unit acquiring, for every terminal, a transmission error rate and a transmission quality of a downlink notified by the terminal, and weighting the transmission quality such that the smaller the transmission error rate is, the larger the weighting is;
a statistic processing unit averaging all of transmission qualities of the terminals weighted by the transmission quality acquiring unit to obtain a total average value, and calculating a dispersion of each of the transmission qualities, and calculating, for every terminal, an average value of the transmission quality weighted by the transmission quality acquiring unit; and
an allotting unit preferentially allotting a band of the downlink to terminals according to both or one of ratios of the transmission qualities weighted by the transmission quality acquiring unit and the average values, and ratios of deviations from the average values of the transmission qualities and the dispersions, such that the larger ratios the terminals have, the more preferentially the terminals are allotted the band.

# F I G. 1

**10 RADIO BASE STATION**

56 NETWORK INTERFACE SECTION

11 CONTROL SECTION

53 WIRELESS SECTION

55 TO/FROM BASE STATION CON-TROLL STATION

52

51 WIRELESS ZONE

60-1 TERMINAL

60-N TERMINAL

# F I G. 2

```
              ┌─────────┐
              │  START  │
              └────┬────┘
                   │
   ┌───────────────▼──────────────┐ (1)
   │ CALCULATE TBS BASED ON       │
   │ EXPONENTIAL SMOOTHING        │
   │ METHOD                       │
   └───────────────┬──────────────┘
                   │
   ┌───────────────▼──────────────┐ (2)
   │ CALCULATE AVERAGE VALUE      │
   │ OF SQUARE VALUES OF          │
   │ TBSs                         │
   └───────────────┬──────────────┘
                   │          (3)、(10)
   ┌───────────────▼──────────────┐
   │ CALCULATE PRIORITY a         │
   └───────────────┬──────────────┘
                   │
   ┌ ─ ─ ─ ─ ─ ─ ─ ▼ ─ ─ ─ ─ ─ ─ ┐
     CALCULATE TBS BASED ON
   │ MOVING AVERAGE METHOD        │
   └ ─ ─ ─ ─ ─ ─ ─ ┬ ─ ─ ─ ─ ─ ─ ┘
                   │
   ┌ ─ ─ ─ ─ ─ ─ ─ ▼ ─ ─ ─ ─ ─ ─ ┐
     CALCULATE AVERAGE VALUE
   │ OF SQUARE VALUES OF          │
     TBSs
   └ ─ ─ ─ ─ ─ ─ ─ ┬ ─ ─ ─ ─ ─ ─ ┘
                   │
   ┌ ─ ─ ─ ─ ─ ─ ─ ▼ ─ ─ ─ ─ ─ ─ ┐
   │ CALCULATE PRIORITY b         │
   └ ─ ─ ─ ─ ─ ─ ─ ┬ ─ ─ ─ ─ ─ ─ ┘
                   │
   ┌ ─ ─ ─ ─ ─ ─ ─ ▼ ─ ─ ─ ─ ─ ─ ┐
     CALCULATE GENERAL PRI-
   │ ORITY                        │
   └ ─ ─ ─ ─ ─ ─ ─ ┬ ─ ─ ─ ─ ─ ─ ┘
                   │     (4)
                  ╱ ▼ ╲
                 ╱ ABOVE ╲
                ╱PROCESSING╲   NO
               ╱ COMPLETED  ╲────────┐
               ╲FOR EVERY   ╱        │
                ╲MOBILE STA-╱        │
                 ╲ TION ?  ╱         │
                  ╲  │   ╱           │
                   ╲ │ ╱             │
                  YES│               │
```

┌──────────────────────────────────┐ (a)、(A)
│ SELECT MOBILE STATION            │
│ IN THE DESCENDING ORDER          │
│ OF PRIORITY a OR GEN-            │
│ ERAL PRIORITY                    │
└──────────────────┬───────────────┘
                   │          (b)、(B)
┌──────────────────▼───────────────┐
│ ALLOT BAND OF DOWNLINK           │
│ TO SELECTED MOBILE STA-          │
│ TION                             │
└──────────────────┬───────────────┘
                   │
              ┌────▼────┐
              │   END   │
              └─────────┘

```
   ┌──────────────────────────────┐ (5)
   │ SELECT NEXT MOBILE STA-      │
   │ TION                         │
   └──────────────────────────────┘
```

# F I G. 3

START

(1) CALCULATE VALUE $rn'(m)$ OF TBS

(2) $TBS_{TX} > TBS_{REQ}^{TX} + CONSTANT$ ? — YES

NO

(3) $rn'(m) = TBS_{TX}$

END

FIG. 4

EP 1 619 913 A1

<table>
<tr><td colspan="2" align="center">**INTERNATIONAL SEARCH REPORT**</td><td colspan="2">International application No.<br><br>PCT/JP03/05538</td></tr>
</table>

| A. CLASSIFICATION OF SUBJECT MATTER |
|---|
| Int.Cl⁷ H04Q7/38, H04L12/56 |

According to International Patent Classification (IPC) or to both national classification and IPC

| B. FIELDS SEARCHED |
|---|

Minimum documentation searched (classification system followed by classification symbols)
Int.Cl⁷ H04B7/24-7/26, H04Q7/00-7/38, H04L12/56

Documentation searched other than minimum documentation to the extent that such documents are included in the fields searched

| Jitsuyo Shinan Koho | 1922–1996 | Toroku Jitsuyo Shinan Koho | 1994–2003 |
|---|---|---|---|
| Kokai Jitsuyo Shinan Koho | 1971–2003 | Jitsuyo Shinan Toroku Koho | 1996–2003 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| A | JP 2002-171287 A (KDDI Corp.), 14 June, 2002 (14.06.02), & US 2002/105937 A1 | 1-9 |
| A | JP 11-261634 A (Kabushiki Kaisha Cho-Kosoku Network Computer Gijutsu Kenkyusho), 24 September, 1999 (24.09.99), (Family: none) | 1-9 |
| A | Yoshiaki OFUJI et al., "Saitei Rate Hosho Kosoku tsuki Shunkan SIR no Motozuku Kosoku Packet Scheduler to sono Tokusei", The Institute of Electronics, Information and Communication Engineers, The Institute of Electronics, Information and Communication Engineers Gijutsu Hokoku, RCS2002-75, pages 1 to 6, 2002 June | 1-9 |

☒ Further documents are listed in the continuation of Box C. ☐ See patent family annex.

| * Special categories of cited documents: | "T" later document published after the international filing date or |
|---|---|
| "A" document defining the general state of the art which is not considered to be of particular relevance | priority date and not in conflict with the application but cited to understand the principle or theory underlying the invention |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 28 July, 2003 (28.07.03) | 12 August, 2003 (12.08.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

<div align="center">

**INTERNATIONAL SEARCH REPORT**

</div>

| | International application No. |
|---|---|
| | PCT/JP03/05538 |

C (Continuation). DOCUMENTS CONSIDERED TO BE RELEVANT

| Category* | Citation of document, with indication, where appropriate, of the relevant passages | Relevant to claim No. |
|---|---|---|
| A | Yoshiaki OFUJI et al., "Kudari Link Kosoku Packet Access ni okeru Kaku User no Throughput ni Chakumoku shita Scheduling-ho no Tokusei Hikaku", The Institute of Electronics, Information and Communication Engineers, The Institute of Electronics, Information and Communication Engineers Gijutsu Hokoku, MoMuC2001-88, pages 51 to 58, 2002 March | 1-9 |
| A | Masahiro ONO et al., "All-IP Mobile-mo Architecture no Teian(3) -Kichikyoku ni okeru QoS Hosho Packet Scheduler no Kento-", The Institute of Electronics, Information and Communication Engineers The Institute of Electronics, Information and Communication Engineers Gijutsu Hokoku, MoMuC2002-3, pages 13 to 18, 2002 May | 1-9 |

Form PCT/ISA/210 (continuation of second sheet) (July 1998)